# EUROPEAN PATENT APPLICATION

(11) **EP 2 555 302 A1**
(43) Date of publication of application: **06.02.2013**
(21) Application number: 11762802.4
(22) Date of filing: 28.03.2011
(51) Int. Cl.: H01M 8/06, H01M 8/04, H01M 8/12

(54) **FUEL CELL SYSTEM**

(30) Priority: 29.03.2010 JP 2010075323
(71) Applicant: JX Nippon Oil & Energy Corporation, Chiyoda-ku Tokyo 100-8162 (JP)
(72) Inventor: MIZUNO Yasushi, Tokyo 100-8162 (JP); IBUKA Takeshi, Tokyo 100-8162 (JP); KAWAJI Yukihiro, Tokyo 100-8162 (JP); YOKOYAMA Shou, Tokyo 100-8162 (JP); ICHIYA Takashi, Tokyo 100-8162 (JP)
(74) Representative: Grünecker, Kinkeldey, Stockmair & Schwanhäusser
(86) International application number: PCT/JP2011/057685
(87) International publication number: WO 2011/122578

(57) **Abstract**

The present invention provides a fuel cell system including a reformer that reforms a raw fuel using a reforming catalyst to generate reformed gas, a fuel cell that generates electric power using the reformed gas generated by the reformer, a heat exchanger that exchanges heat between heat of combustion exhaust gas discharged from the fuel cell and water introduced thereinto, a condenser that condenses steam contained in the combustion exhaust gas discharged from primary side downstream of the heat exchanger to recover water, a pump for supplying the water to secondary side upstream of the heat exchanger; a hot-water temperature measurement instrument that measures temperature of hot water at secondary side downstream of the heat exchanger, and a control unit that controls a supply amount by the pump. The control unit controls the pump so that the temperature of the hot water at the secondary side downstream of the heat exchanger measured by the hot-water temperature measurement instrument approaches a target hot-water temperature that is set based on a type of the raw fuel, an amount of the raw fuel to be introduced into the reformer, and an amount of air to be introduced into the fuel cell.

## Description

### Technical Field

The present invention relates to a fuel cell system.

### Background Art

Conventionally known is a fuel cell system configured to enable water self-sustaining operation in which water is used for steam reforming. For example, in a fuel cell system described in Patent Literature 1, when the water level in a water tank that stores therein water to be used for steam reforming becomes lower than a preset water level, by decreasing the amount of reaction air supply supplied to a cathode of a fuel cell to increase the air utilization ratio of the fuel cell, and thus decreasing the amount of combustion exhaust gas discharged from the fuel cell to make full use of the capability of a condenser, the amount of recovered water is increased.

### Citation List

### Patent Literature

[Patent Literature 1] Japanese Patent Application Laid-Open Publication No. 2008-234869

### Summary of Invention

### Technical Problem

As described above, in fuel cell systems including the above-mentioned conventional technique, stable water self-sustaining operation is required.

The present invention is made to meet the above-mentioned requirement, and aims to provide a fuel cell system enabling stable water self-sustaining operation.

### Solution to Problem

To meet the above-mentioned requirement, a fuel cell system includes a reformer that reforms a raw fuel using a reforming catalyst to generate reformed gas; a fuel cell that generates electric power using the reformed gas generated by the reformer; a heat exchanger that exchanges heat between heat of combustion exhaust gas discharged from the fuel cell and water introduced thereinto; a condenser that condenses steam contained in the combustion exhaust gas discharged from primary side downstream of the heat exchanger to recover water; a pump for supplying the water to secondary side upstream of the heat exchanger; a hot-water temperature measurement instrument that measures temperature of hot water at secondary side downstream of the heat exchanger; and a control unit that controls a supply amount by the pump, wherein the control unit controls the pump so that the temperature of the hot water at the secondary side downstream of the heat exchanger measured by the hot-water temperature measurement instrument approaches a target hot-water temperature that is set based on a type of the raw fuel, an amount of the raw fuel to be introduced into the reformer, and an amount of air to be introduced into the fuel cell.

In the fuel cell system, the control unit controls the pump so that the temperature of the hot water at the secondary side downstream of the heat exchanger measured by the hot-water temperature measurement instrument approaches the target hot-water temperature that is set based on the type of the raw fuel, the amount of the raw fuel to be introduced into the reformer, and the amount of air to be introduced into the fuel cell. The temperature of the combustion exhaust gas discharged from the primary side downstream of the heat exchanger to the condenser can be controlled by changing the amount of water introduced to the secondary side upstream of the heat exchanger, and thus can be decreased by increasing the amount of water supplied to the heat exchanger. In addition, because the temperature of the combustion exhaust gas in the condenser decreases by decreasing the temperature of the combustion exhaust gas discharged from the primary side downstream of the heat exchanger, the amount of recovered water can be increased. In this case, the temperature of the hot water at the secondary side downstream of the heat exchanger is controlled so as to approach the temperature that is set based on the type of the raw fuel, the amount of the raw fuel, and the amount of air to be introduced into the fuel cell, whereby stable recovery of water becomes possible regardless of the type of the raw fuel. Therefore, stable water self-sustaining operation becomes possible.

The fuel cell system further includes a gas temperature measurement instrument that measures temperature of the combustion exhaust gas at a primary side outlet of the condenser, wherein the control unit controls the pump so that the temperature at the primary side outlet of the condenser measured by the gas temperature measurement instrument becomes equal to or lower than the temperature that is set based on the type of the raw fuel, the amount of the raw fuel to be introduced into the reformer, and the amount of air to be introduced into the fuel cell. With this configuration, the temperature of the combustion exhaust gas at the primary side outlet of the condenser is controlled so as to be equal to or lower than the temperature that is set based on the type of the raw fuel, the amount of the raw fuel, and the amount of air to be introduced into the fuel cell and accordingly, while stable recovery of water is enabled regardless of the type of the raw fuel, more stable water self-sustaining operation becomes possible.

When an amount of water in a water tank that stores therein the water recovered by the condenser becomes equal to or smaller than a predetermined amount, the control unit controls the pump in such a manner that the target hot-water temperature is decreased and, when the amount of water in the water tank is equal to or larger than the predetermined amount, the control unit controls the pump so that the temperature of the hot water at the secondary side downstream of the heat exchanger becomes a predetermined target temperature. With this configuration, shortage of water in the water tank can be securely prevented, and also the temperature of the hot water can be successfully set equal to or lower than the temperature that is set based on the type of the raw fuel and the ratio of the amount of the raw fuel to the amount of air to be introduced into the fuel cell. In addition, when water is kept in the water tank, by setting the predetermined target temperature at a high temperature, for example, hot water that is of a high temperature and useful can be stored in a hot-water storage tank.

### Advantageous Effects of Invention

According to the present invention, stable water self-sustaining operation becomes possible.

### Brief Description of Drawings

[Fig. 1] Fig. 1 is a block diagram of a fuel cell system according to one embodiment.
[Fig. 2] Fig. 2 is a graph illustrating a correlation between dew-point temperature and air/fuel ratio.
[Fig. 3] Fig. 3 is a flowchart illustrating an operational method of the fuel cell system.
[Fig. 4] Fig. 4 is a flowchart illustrating a process procedure of a circulating pump by a control unit.
[Fig. 5] Fig. 5 is a flowchart illustrating an operational method of a fuel cell system according to a modified example.
[Fig. 6] Fig. 6 is a flowchart illustrating an operational method of a fuel cell system according to a modified example.
[Fig. 7] Fig. 7 is a graph illustrating a correlation between hot-water set temperature and air/fuel ratio according to the modified example.

### Description of Embodiments

Preferred Embodiments will be described in detail hereinafter with reference to the accompanying drawings.

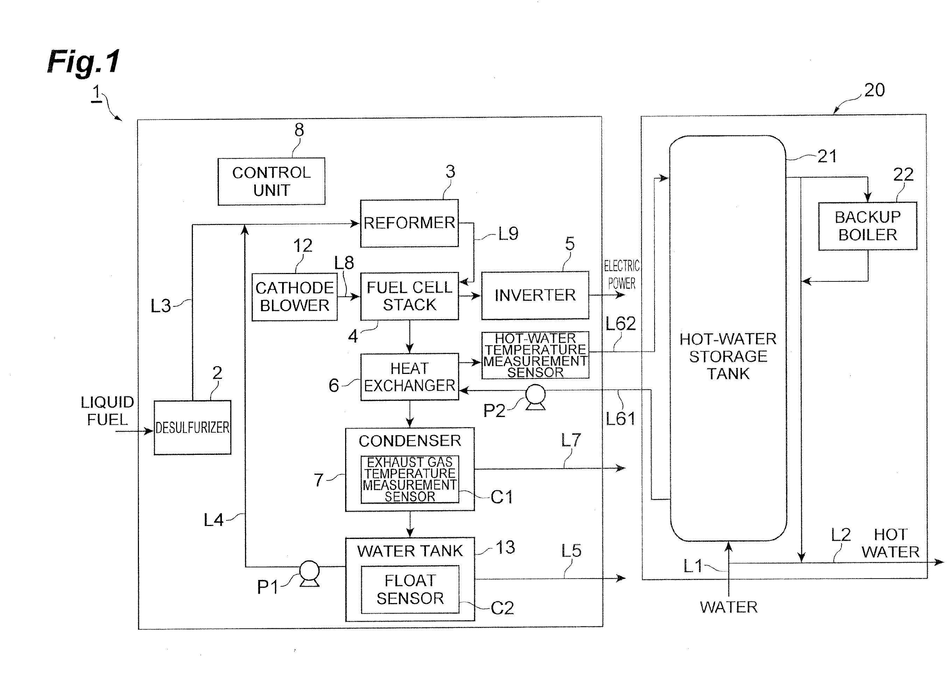

Fig. 1 is a block diagram of a fuel cell system according to one embodiment. As depicted in Fig. 1, this fuel cell system 1 includes a desulfurizer 2, a reformer 3 that steam reforms a raw material to generate reformed gas containing hydrogen, a solid oxide fuel cell (SOFC) stack (hereinafter, "fuel cell stack") 4 that makes the reformed gas generated by the reformer 3 and air electrochemically react to generate electricity, an inverter 5, a heat exchanger 6, a condenser 7, and a control unit 8. The fuel cell system 1 is a system that generates electricity using as a raw fuel a fuel containing a hydrogen atom such as kerosene, LPG, and city gas from the view point of being easily available and being able to be independently stored, and is adopted as a electric power supply source for household use and also used as a water heater for generating hot water, for example.

The desulfurizer 2 is a component that desulfurizes the raw fuel introduced from outside. In the desulfurizer 2, sulfur content in the raw fuel is removed (adsorbed) by a desulfurization catalyst. Into the desulfurizer 2, the raw fuel is supplied by a raw fuel blower or a pump (neither is depicted). The introduced amount of the raw fuel supplied by the raw fuel blower or the pump can be detected by the control unit 8 by providing a flowmeter to a line through which the raw fuel passes or grasping characteristics of the raw fuel blower or the pump.

The reformer 3 makes the liquid fuel thus desulfurized undergo a steam-reforming reaction with steam and a reforming catalyst to generate a steam-reformed gas containing hydrogen.

The fuel cell stack 4 is configured with a plurality of fuel cells stacked, generates electricity using the reformed gas generated by the reformer 3, and outputs a DC current. The fuel cells each have an anode, a cathode, and an electrolyte that is a solid oxide arranged between the anode and the cathode. In each of the fuel cells, the reformed gas is introduced into the anode and also air is introduced into the cathode by a cathode blower 12, and an electrochemical electricity-generating reaction is performed. The fuel cell stack 4 generally operates at high temperatures of about 550°C to 1000°C. Note that fuels such as hydrogen, carbon monoxide, and methane in an anode combustion exhaust gas that has been discharged from the fuel cell stack 4 and has not contributed to electricity generation merge with oxygen in a cathode combustion exhaust gas at the outlet of the stack and undergo a combustion reaction to become combustion exhaust gas. In addition, the inverter 5 converts the output DC current into an AC current.

The heat exchanger 6 is a component that exchanges heat between the combustion exhaust gas that has been discharged from the fuel cell stack 4 and has not contributed to electricity generation and water introduced thereinto. The heat exchanger 6 exchanges heat between water supplied from a hot-water storage tank 21 described later through a circulation line L61 and the combustion exhaust gas introduced from the fuel cell stack 4. Hot water (water) heated by the heat exchanger 6 is stored in the hot-water storage tank 21 through a second circulation line L62 by a circulating pump P2. Note that the heat exchanger 6 is set so that the water is heated at about 75 °C during normal operation.

The condenser 7 is a component that condenses steam contained in the combustion exhaust gas discharged from the primary side downstream of the heat exchanger 6. The condenser 7 decreases the temperature of the combustion exhaust gas down to the dew-point temperature to condense the steam contained in the combustion exhaust gas, and recovers the water thus condensed (drain water). The water (condensed water) condensed by the condenser 7 is recovered in a water tank 13. To the condenser 7, an exhaust gas temperature measurement sensor (gas temperature measurement instrument) C1 is provided. The exhaust gas temperature measurement sensor C1 is a sensor for measuring the temperature of the combustion exhaust gas at a primary side outlet of the condenser 7. The exhaust gas temperature measurement sensor C1 is a thermistor or a thermocouple sensor, for example, which indicates a temperature measured as an electric signal.

In addition, to the fuel cell system 1 having the above-described configuration, a hot-water supply system 20 is connected. The hot-water supply system 20 includes the hot-water storage tank 21 and a backup boiler 22. The hot-water storage tank 21 is a tank that stores therein hot water heated by heat generated by the fuel cell stack 4. More specifically, the hot-water storage tank 21 supplies water (tap water) introduced by a water supply line L1 to the heat exchanger 6, and stores therein hot water heated by the heat exchanger 6. The hot water stored in the hot-water storage tank 21 is poured out through a hot-water supply line L2.

The backup boiler 22 is a boiler that supplementarily heats the hot water poured out from the hot-water storage tank 21 as necessary. The backup boiler 22 further heats the hot water stored in the hot-water storage tank 21 and supply the hot water thus heated to the hot-water supply line L2. With this configuration, the fuel cell system 1 and the hot-water supply system 20 constitute a fuel cell cogeneration system.

The fuel cell system 1 is provided with a fuel line L3 for introducing the desulfurized fuel from outside to the reformer 3 via the desulfurizer 2. To the downstream side of the fuel line L3, the reformer 3 is connected.

In addition, to the fuel line L3 near the reformer 3, a water line L4 for introducing water (raw water) to be used for steam reforming to the reformer 3 is connected. On the upstream side of the water line L4, the water tank 13 storing therein water to be supplied to the reformer 3 is provided and, to the water line L4, a water supply pump P1 that supplies water of the water tank 13 to the reformer 3 is provided. The water tank 13 is a tank that stores therein water (drain water) condensed and recovered by the condenser 7. To the water tank 13, a discharge line L5 for discharging overflow water is connected. In addition, to the water tank 13, a float sensor C2 for detecting the fluid level position of water in the tank is provided. This float sensor C2 is a magnetic sensor, for example, which detects the position of a float moving according to increase and decrease of water with a reed switch and indicates the liquid level position by an electric signal. Note that about one litter of water is stored in the water tank 13.

To the heat exchanger 6, the first and the second circulation lines L61 and L62 are connected. The first circulation line L61 is connected to the secondary side upstream of the heat exchanger 6, and the second circulation line L62 is connected to the secondary side downstream of the heat exchanger 6. On the upstream side of the first circulation line L61, the hot-water storage tank 21 is provided and, to the first circulation line L61, the circulating pump P2 that circulates the water stored in the hot-water storage tank 21 is provided. The circulating pump P2 supplies water to the secondary side upstream of the heat exchanger 6, and the supplied amount of the water supplied from the hot-water storage tank 21 to the heat exchanger 6 can be adjusted by the control unit 8. Note that the upstream side of the first circulation line L61 is connected to a lower portion of the hot-water storage tank 21, and the downstream side of the second circulation line L62 is connected to an upper portion of the hot-water storage tank 21. In addition, to the second circulation line L62, a hot-water temperature measurement sensor (hot-water temperature measurement instrument) C3 for measuring the temperature of hot water passing through the inside is provided, and the hot-water temperature measurement sensor C3 measures the hot-water temperature at the secondary side downstream of the heat exchanger 6. The hot-water temperature measurement sensor C3 is a thermistor or a thermocouple sensor, for example, which indicates the measured temperature as an electric signal. To the condenser 7, a combustion exhaust gas discharge line L7 for discharging the combustion exhaust gas is connected. The combustion exhaust gas discharge line L7 is connected to the primary side outlet of the condenser 7.

In addition, to the fuel cell stack 4, an air line L8 for introducing air is connected and, on the upstream side of the air line L8, the cathode blower 12 is provided. In addition, to the fuel cell stack 4, a reformed gas line L9 for introducing the reformed gas (hydrogen-rich reformed gas) from the reformer 3 is connected.

The control unit 8 is a unit that controls various instruments. To the control unit 8, the cathode blower 12, the exhaust gas temperature measurement sensor C1, the float censor C2, the hot-water temperature measurement sensor C3, the water supply pump P1, the circulating pump P2, and the raw fuel blower are connected. The control unit 8 is configured with a central processing unit (CPU) that performs computations, a read only memory (ROM) that stores therein a program and the like for causing the CPU to execute each process, a random access memory (RAM) that stores therein various data such as computation results, and the like. Note that not depicted but the control unit 8 and the various instruments are electrically connected.

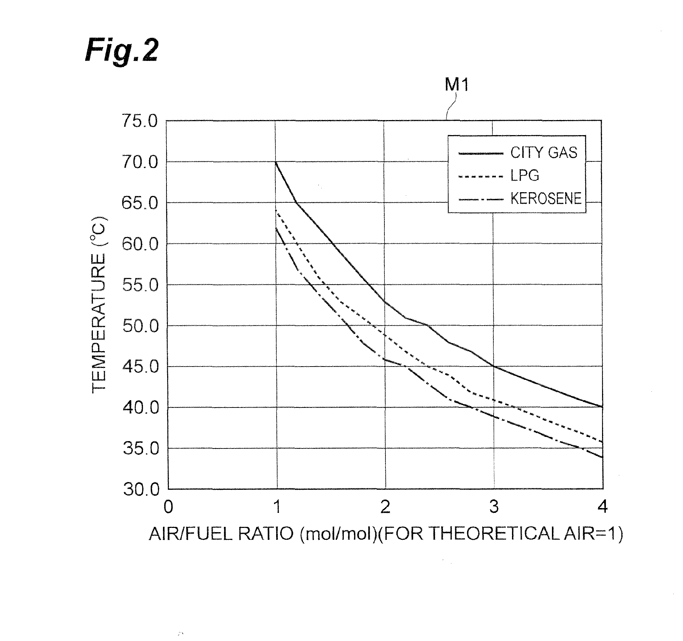

In addition, the control unit 8 has a map. As depicted in Fig. 2, this map M1 is a graph that illustrates a correlation between temperature and air/fuel ratio, where the ordinate indicates dew-point temperature [°C] and the abscissa indicates the air/fuel ratio [mol/mol]. In the map M1, temperatures corresponding to the air/fuel ratios are set for each of fuel types, and are exemplified for city gas, LPG and kerosene. In Fig. 2, the city gas is represented by a solid line, the LP gas is represented by a dotted line, and the kerosene is represented by a dash-dot line. The temperatures are dew-point temperatures that are set based on the fuel types, the amount of fuel (introduced amount) introduced into the reformer 3, the amount of air introduced from the cathode blower 12 into the cathode of the fuel cell stack 4. The dew-point temperatures herein are temperatures at which condensing (condensation) starts when dry (containing no moisture) air is normally burned and cooled. In addition, the expression FOR THEORETICAL AIR=1 depicted in Fig. 2 indicates a state in which oxygen (O₂) completely disappears. Note that as a method for obtaining the dew-point temperatures, the Sonntag formula specified in JIS Z-8806, for example, can be used.

Upon receiving an electric signal indicating a liquid level position output from the float sensor C2, the control unit 8 determines whether the liquid level position indicated by the electric signal is lower than a predetermined position or not. Upon determining that the liquid level position in the water tank 13 is lower than the predetermined position, the control unit 8 inputs an electric signal indicating the temperature of the combustion exhaust gas of the condenser 7 from the exhaust gas temperature measurement sensor C1, and also reads the map M1. Then, the control unit 8 controls the circulating pump P2 so that the temperature of the combustion exhaust gas of the condenser 7 becomes equal to or lower than the dew-point temperature set in the map M1. More specifically, the control unit 8 acquires the air/fuel ratio in a current operating state, and controls the circulation pump P2 to increase the amount of water supplied to the heat exchanger 6 so that the temperature of the combustion exhaust gas becomes equal to or lower than the temperature corresponding to the air/fuel ratio. Accordingly, the temperature of the hot water supplied from the heat exchanger 6 decreases and also the temperature of the combustion exhaust gas discharged into the condenser 7 decreases, and thus the temperature of the combustion exhaust gas at the primary side outlet of the condenser 7 becomes equal to or lower than the temperature set in the map M1. Note that the air/fuel ratio in the current operating state is acquired based on the supplied amount of air supplied from the cathode blower 12 and the introduced amount of fuel supplied from the raw fuel blower (not depicted).

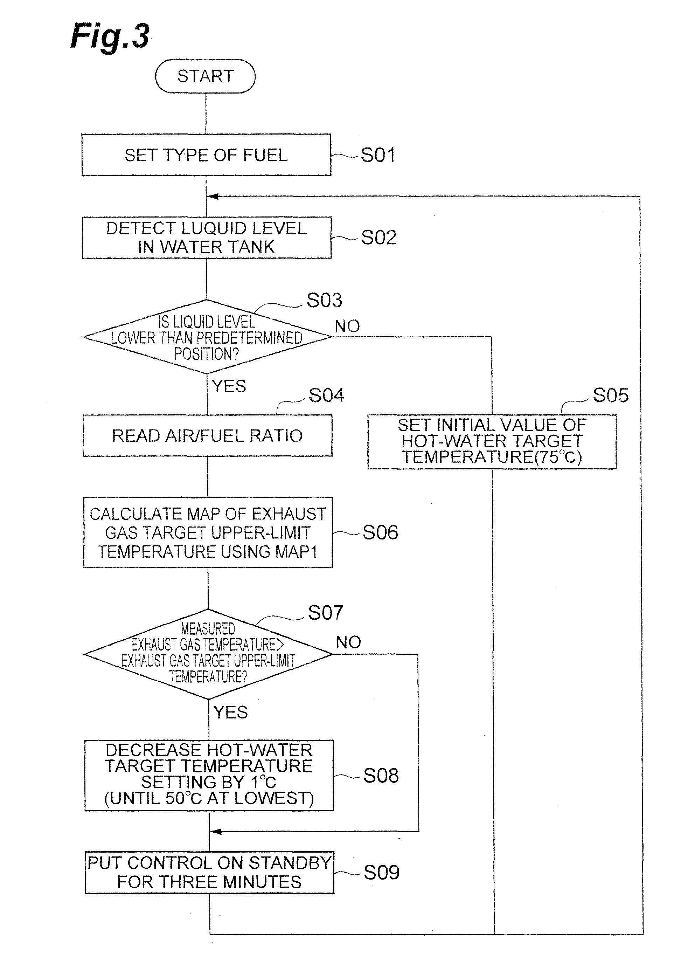

Referring to Fig. 3, an operational method of the above-described fuel cell system 1 will be described hereinafter. Fig. 3 is a flowchart illustrating the operational method of the fuel cell system. Note that in the following descriptions, cases in which LPG is used as the raw fuel will be exemplified.

As depicted in Fig. 3, the type of raw fuel is set first in the control unit 8 (step S01). Next, the position of the liquid level in the water tank 13 is detected by the float sensor C2 (step S02). Then, whether the position of the liquid level in the water tank 13 is lower than the predetermined position or not is determined (step S03). Herein, the predetermined position of the liquid level of the water tank 13 is a position at which the amount of water is kept for enabling operation for a certain period even without the condensed water (drain water) being recovered in the water tank 13 in the fuel cell system 1. More specifically, in the fuel cell system 1, for example, about 7 g/min of water is used in rated operation, and accordingly a sensor is installed at a position where whether 7 g×60 min=420 g or more amount of water sufficient for enabling operation even without recovery for one hour exists in the tank or not can be determined.

As a result of the determination at step S03, when the position of the liquid level in the water tank 13 is lower than the predetermined position, increasing the amount of condensed water is necessary for water self-sustaining, and thus based on the introduced amount of air introduced from the cathode blower 12 and the introduced amount of fuel introduced from the raw fuel blower, the air/fuel ratio is calculated by the control unit 8 (step S04). On the other hand, as a result of the determination at step S03, when the position of the liquid level in the water tank 13 is higher than the predetermined position, water necessary for the time being is considered to be kept in the water tank 13, and a set temperature of the hot water is set to a predetermined target hot-water temperature (e.g., 75°C) being an initial value (step S05).

Subsequently, the map M1 is read, and a target upper-limit temperature of the combustion exhaust gas is calculated by using this map M1 (step S06). More specifically, as depicted in Fig. 2, when the air/fuel ratio is "2", for example, the control unit 8 calculates the target upper-limit temperature of the combustion exhaust gas to be "49°C".

Next, the temperature of the combustion exhaust gas at the primary side outlet of the condenser 7 measured by the exhaust gas temperature measurement sensor C1 and the target upper-limit temperature calculated at step S06 are compared, and whether the temperature of the combustion exhaust gas is higher than the target upper-limit temperature or not is determined (step S07). As a result of this determination, when the temperature of the combustion exhaust gas is determined to be higher than the target upper-limit temperature, the temperature of the combustion exhaust gas needs to be decreased, and accordingly the hot-water target temperature setting is decreased by 1°C, for example (step S08). Herein, the temperature of hot water to be stored in the hot-water storage tank 21 is preferred to be equal to or higher than a temperature of hot water used as supplied one, and is set at about 50°C at the lowest in consideration of heat radiation.

On the other hand, as a result of the determination at step S07, when the temperature of the combustion exhaust gas is not determined to be higher than the target upper-limit temperature, proceed to step S09. At step S09, the control is put on standby for three minutes. This is set, in consideration of time lags from changing control to the actual changes in temperature or water level of the system, to suppress hunting or excessive control.

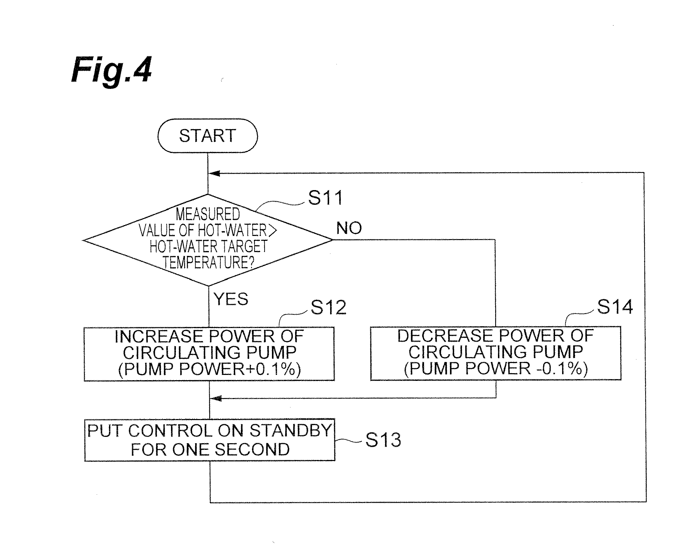

Control of the circulating pump P2 by the control unit 8 will be described hereinafter. Fig. 4 is a flowchart illustrating a process procedure of the circulating pump P2 by the control unit 8.

As depicted in Fig. 4, the temperature of the hot water measured by the hot-water temperature measurement sensor C3 and the hot-water target temperature are compared first, and whether the temperature of the hot water is higher than the hot-water target temperature or not is determined (step S11). The hot-water target temperature is set based on the type of the fuel, the amount (introduced amount) of the fuel to be introduced into the reformer 3, and the amount of air to be introduced from the cathode blower 12 into the cathode of the fuel cell stack 4.

As a result of the determination at step S11, when the temperature of the hot water is determined to be higher than the hot-water target temperature, increase the power (+0.1%) of the circulating pump P2 (step S12). On the other hand, as a result of the determination at step S11, when the temperature of the hot water is not determined to be higher than the hot-water target temperature, decrease the power (-0.1%) of the circulating pump P2 (step S13). Subsequently, put the control of the circulating pump P2 on standby for one second (step S 14). This prevents hunting. Note that with respect to the pump power value of the circulating pump P2, the minimum value and the maximum value thereof are preferred to be set in advance. This can prevent excessive cooling by excessive power of the pump or pump lock-up by insufficient power.

As described above, in the fuel cell system 1, the control unit 8 controls the circulating pump P2 so that the temperature of the hot water at the secondary side downstream of the heat exchanger 6 measured by the hot-water temperature measurement sensor C3 approaches the target hot-water temperature that is set based on the type of the raw fuel, the introduced amount of the raw fuel, and the amount of air introduced from the cathode blower 12 into the fuel cell stack 4. The temperature of the combustion exhaust gas discharged from the primary side downstream of the heat exchanger 6 into the condenser 7 can be controlled by changing the amount of water to be introduced into the secondary side upstream of the heat exchanger 6, and thus can be decreased by increasing the amount of water supplied to the heat exchanger 6. In addition, the temperature of the combustion exhaust gas in the condenser 7 decreases by lowering the temperature of the combustion exhaust gas discharged from the primary side downstream of the heat exchanger 6, and thus the amount of recovered water can be increased. In this case, the temperature of the combustion exhaust gas of the condenser 7 is controlled to be equal to or lower than the temperature that is set based on the type of the raw fuel, the amount of the raw fuel, and the amount of air introduced into the fuel cell stack 4, and accordingly stable recovery of water becomes possible regardless of the type of the raw fuel. Therefore, stable water self-sustaining operation becomes possible.

The control unit 8 also, only when the amount of water in the water tank 13 becomes equal to or lower than the predetermined amount, increases the amount of water supplied from the circulating pump P2 to the heat exchanger 6. With this configuration, water shortage in the water tank 13 can be surely prevented, and also hot water that is of a high temperature and useful can be stored in the hot-water storage tank 21 when the amount of water in the water tank 13 is sufficient.

The present invention is not limited to the above-described embodiments. For example, in the above-described embodiments, the temperature of the combustion exhaust gas in the condenser 7 is decreased by controlling the circulating pump P2, but alternatively the cathode blower 12 may be controlled in concert with this control. More specifically, the control unit 8 reduces the blowing amount of air from the cathode blower 12. Accordingly, as depicted in the map M1 of Fig. 2, the value of the air/fuel ratio becomes smaller and thus, without increasing the amount of water supplied by the circulating pump P2 to significantly decrease the temperature in the condenser 7, water can be recovered in the condenser 7 while maintaining a certain level of temperature. Note that because of the cooperative control of the circulating pump P2 and the cathode blower 12, temperature increase in the fuel cell stack 4 can be suppressed compared to the case of controlling only the cathode blower 12 to reduce the amount of air as in a conventional manner, and deterioration of the fuel cell stack 4 can be suppressed.

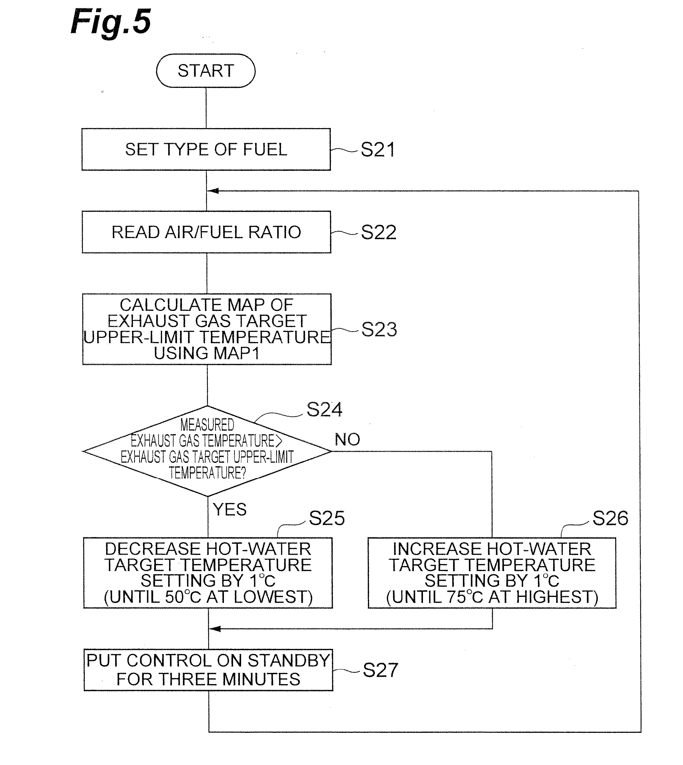

In addition, in the above-described embodiments, the control unit 8 controls the circulating pump P2 when the water level in the water tank 13 detected by the float sensor C2 becomes equal to or lower than the predetermined position (the amount of water is equal to or lower than the predetermined amount), but alternatively this control may be constantly performed. More specifically, this will be described with reference to Fig. 5. Note that the control depicted in Fig. 5 differs from the control depicted in Fig. 3 in lacking the determination with the float sensor C2.

As depicted in Fig. 5, the type of the raw fuel is set first in the control unit 8 (step S21). Next, based on the introduced amount of air introduced from the cathode blower 12 and the introduced amount of fuel introduced from the raw fuel blower, the air/fuel ratio is calculated by the control unit 8 (step S22). Subsequently, the map M1 is read, and the target upper-limit temperature of the combustion exhaust gas is calculated by using this map M1 (step S23). More specifically, as depicted in Fig. 2, when the air/fuel ratio is "2", for example, the control unit 8 calculates the target upper-limit temperature of the combustion exhaust gas to be "49°C".

Next, the temperature of the combustion exhaust gas in the condenser 7 measured by the exhaust gas temperature measurement sensor C1 and the target upper-limit temperature calculated at step S23 are compared, and whether the temperature of the exhaust gas is higher than the target upper-limit temperature or not is determined (step S24). As a result of this determination, when the temperature of the combustion exhaust gas is determined to be higher than the target upper-limit temperature, the temperature of the combustion exhaust gas needs to be decreased, and accordingly the hot-water target temperature is decreased by 1°C, for example (step S25). On the other hand, as a result of the determination at step S24, when the temperature of the combustion exhaust gas is not determined to be higher than the target upper-limit temperature, the hot-water target temperature is increased by 1°C, for example (step S26). This makes it possible to store useful hot water in the hot-water storage tank 21. Then, the control is put on standby for three minutes (step S27). By the control as described above, water self-sustaining becomes possible even without providing the float sensor C2.

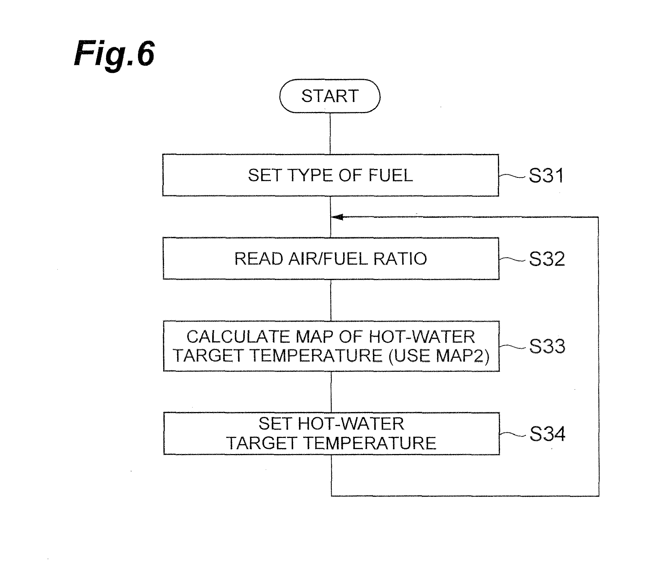

In addition, in the above-described embodiments, the temperature at the primary side outlet of the condenser 7 is measured by the exhaust gas temperature measurement sensor C1, and this temperature is controlled so as to be equal to or lower than the temperature that is set based on the type of the raw fuel, the introduced amount of the raw fuel, and the amount of air introduced from the cathode blower 12 into the fuel cell stack 4, but the exhaust gas temperature measurement sensor C1 does not necessarily have to be provided. In this case, the control depicted in Fig. 6 is performed.

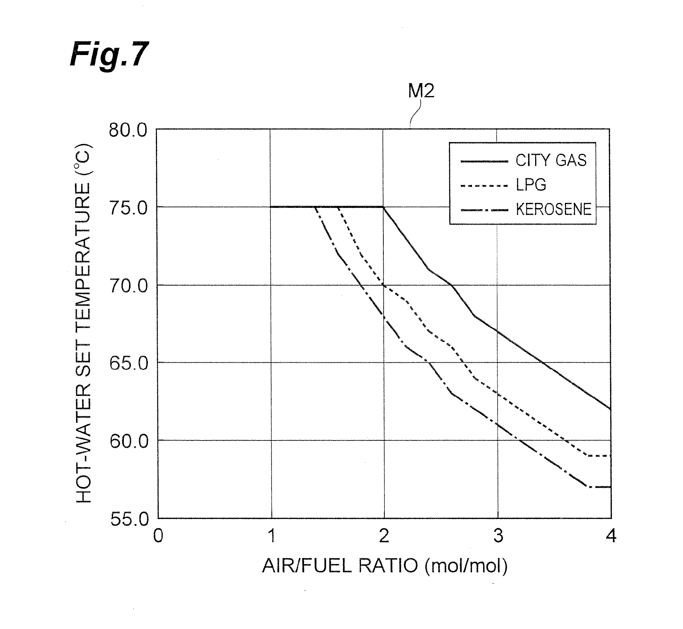

As depicted in Fig. 6, the type of the raw fuel is set first in the control unit 8 (step S31). Next, based on the introduced amount of air introduced from the cathode blower 12 and the introduced amount of fuel introduced from the raw fuel blower, the air/fuel ratio is calculated by the control unit 8 (step S32). Then, a map M2 depicted in Fig. 7 is read, and the target hot-water temperature of the hot water is calculated by using this map M2 (step S33). As depicted in Fig. 7, the map M2 is a graph that illustrates a correlation between hot-water set temperature and air/fuel ratio, where the ordinate indicates the hot-water set temperature [°C] and the abscissa indicates the air/fuel ratio [mol/mol]. In the map M2, hot-water set temperatures corresponding to the air/fuel ratios are set for each of fuel types, and are exemplified for city gas, LPG, and kerosene. In Fig. 7, the city gas is represented by a solid line, the LPG is represented by a dotted line, and the kerosene is represented by a dash-dot line.

With respect to the target hot-water temperature calculated based on the map M2, specifically, as depicted in Fig. 7, when the air/fuel ratio is "2", for example, the target hot-water temperature of the hot water is "70°C". Then, the circulating pump P2 is controlled by the control unit 8 so that the temperature of the hot water becomes the target hot-water temperature thus calculated (step S34). Note that in the above-described control, values need to be changed depending on types of the heat exchanger 6 in the map M2, and are set in advance to hot-water temperatures at which a water self-sustaining amount of condensed water can be secured based on verification. By the control as described above, water self-sustaining becomes possible even without providing the exhaust gas temperature measurement sensor C1.

### Reference Signs List

1... fuel cell system, 3... reformer, 4... fuel cell stack (fuel cell), 6... heat exchanger, 7... condenser, 8... control unit, C1... exhaust gas temperature measurement sensor (gas temperature measurement instrument), C3... hot-water temperature measurement sensor (hot-water temperature measurement instrument), P2... circulating pump (pump)

## Claims

1. A fuel cell system comprising:
a reformer that reforms a raw fuel using a reforming catalyst to generate reformed gas;
a fuel cell that generates electric power using the reformed gas generated by the reformer;
a heat exchanger that exchanges heat between heat of combustion exhaust gas discharged from the fuel cell and water introduced thereinto;
a condenser that condenses steam contained in the combustion exhaust gas discharged from primary side downstream of the heat exchanger to recover water;
a pump for supplying the water to secondary side upstream of the heat exchanger;
a hot-water temperature measurement instrument that measures temperature of hot water at secondary side downstream of the heat exchanger; and
a control unit that controls a supply amount by the pump,
wherein
the control unit controls the pump so that the temperature of the hot water at the secondary side downstream of the heat exchanger measured by the hot-water temperature measurement instrument approaches a target hot-water temperature that is set based on a type of the raw fuel, an amount of the raw fuel to be introduced into the reformer, and an amount of air to be introduced into the fuel cell.

2. The fuel cell system according to Claim 1, further comprising:
a gas temperature measurement instrument that measures temperature of the combustion exhaust gas at a primary side outlet of the condenser, wherein
the control unit controls the pump so that the temperature at the primary side outlet of the condenser measured by the gas temperature measurement instrument becomes equal to or lower than the temperature that is set based on the type of the raw fuel, the amount of the raw fuel to be introduced into the reformer, and the amount of air to be introduced into the fuel cell.

3. The fuel cell system according to Claim 1 or 2, wherein when an amount of water in a water tank that stores therein the water recovered by the condenser becomes equal to or smaller than a predetermined amount, the control unit controls the pump in such a manner that the target hot-water temperature is decreased and, when the amount of water in the water tank is equal to or larger than the predetermined amount, the control unit controls the pump so that the temperature of the hot water at the secondary side downstream of the heat exchanger becomes a predetermined target temperature.
